(19) Europäisches Patentamt
European Patent Office
Office européen des brevets

(11) **EP 3 640 593 A1**

(12) **EUROPEAN PATENT APPLICATION**
published in accordance with Art. 153(4) EPC

(43) Date of publication:
**22.04.2020 Bulletin 2020/17**

(51) Int Cl.:
***G01C 21/16*** (2006.01)

(21) Application number: **18818319.8**

(22) Date of filing: **12.06.2018**

(86) International application number:
**PCT/JP2018/022425**

(87) International publication number:
**WO 2018/230560 (20.12.2018 Gazette 2018/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.06.2017 JP 2017116337**

(71) Applicant: **Tohoku University**
**Sendai-shi, Miyagi 980-8577 (JP)**

(72) Inventors:
• **SATO, Motoyuki**
  **Sendai-shi, Miyagi 980-8577 (JP)**
• **KIKUTA, Kazutaka**
  **Sendai-shi, Miyagi 980-8577 (JP)**

(74) Representative: **Müller Schupfner & Partner**
**Patent- und Rechtsanwaltspartnerschaft mbB**
**Schellerdamm 19**
**21079 Hamburg (DE)**

(54) **POSITION DETECTING DEVICE AND POSITION DETECTING METHOD**

(57)     A position detection device is a position detection device installed in an apparatus, and detecting a position of the apparatus, and includes an acceleration sensor configured to detect acceleration information of the apparatus, a static acceleration removing unit configured to remove static acceleration information indicating acceleration information in a static state of the apparatus, from the acceleration information detected by the acceleration sensor, and generate movement acceleration information indicating acceleration information in a moving state of the apparatus, an error deriving unit configured to derive an error component contained in the movement acceleration information, an acceleration correcting unit configured to correct the movement acceleration information by subtracting the error component from the movement acceleration information, and a position information acquiring unit configured to acquire position information of the apparatus based on the corrected movement acceleration information.

FIG. 3

```
                    ┌─ START ─┐
                         │
        ┌────────────────────────────┐
        │  MOVE INSTALLATION          │─── S1
        │  APPARATUS                  │
        └────────────────────────────┘
                         │
        ┌────────────────────────────┐
        │  DETECT ACCELERATION        │─── S2
        │  INFORMATION                │
        └────────────────────────────┘
                         │
        ┌────────────────────────────┐
        │  REMOVE STATIC ACCEL-       │─── S3
        │  ERATION INFORMATION        │
        └────────────────────────────┘
                         │
        ┌────────────────────────────┐
        │  DERIVE TREND               │─── S4
        └────────────────────────────┘
                         │
        ┌────────────────────────────┐
        │  CORRECT MOVEMENT           │─── S5
        │  ACCELERATION INFORMATION   │
        └────────────────────────────┘
                         │
        ┌────────────────────────────┐
        │  ACQUIRE POSITION           │─── S6
        │  INFORMATION                │
        └────────────────────────────┘
                         │
                    ┌─ END ─┐
```

EP 3 640 593 A1

Printed by Jouve, 75001 PARIS (FR)

**Description**

Technical Field

The present invention relates to a position detection device and a position detection method that use an acceleration sensor.

Background Art

A method for detecting a position of an apparatus by using an acceleration sensor is conventionally put into practical use. Further, to improve accuracy of position detection using an acceleration sensor, a method in which a global positioning system (GPS) or video information is additionally used is also proposed recently. The method in which position information acquired by a GPS or video information obtained by a camera or the like is combined with the technique of detecting a position by using an acceleration sensor in this way is used in a vehicle-mounted car navigation system, for example.

On the other hand, there is also proposed a method for detecting a position of an apparatus without using an acceleration sensor. As the method without using an acceleration sensor, there is known a method for correcting position information acquired by a GPS by using image information acquired by a camera, for example (refer to Non Patent Literature 1, for example).

Further, as the method for detecting a position of an apparatus, a method using a laser transmitter is proposed (refer to Non Patent Literature 2, for example). In the case of using a laser transmitter, a plurality of laser transmitters are installed around the apparatus, and the position of the apparatus is detected based on information contained in radio waves transmitted and received between the device and the transmitters.

Citation List

Non Patent Literature

Non Patent Literature 1: Agrawal, M., & Konolige, K. (2006). "Real-time Localization in Outdoor Environments using Stereo Vision and Inexpensive GPS." In 18th International Conference on Pattern Recognition (ICPR'06) (pp. 1063-1068). IEEE.
Non Patent Literature 2: I, M., Wulf,O., & Wagner, B. (2008). "A GPS and Laser-based localization for urban and non-urban outdoor environments." In 2008 IEEE/RSJ International Conference on Intelligent Robots and Systems (pp. 149-154). IEEE.

Summary of Invention

Technical Problem

However, in the case of using the position information acquired by the GPS as in the method described in Non Patent Literature 1, the apparatus needs to be able to receive signals by the GPS. Accordingly, in the places where the signals of the GPS cannot be received, such as indoors or mountainous areas, the position cannot be detected. Further, in the case of using the image information acquired by a camera, position detection depends on environmental conditions such as ambient brightness and distance.

Further, in the method described in Non Patent Literature 2, it is necessary to install laser transmitters around the apparatus. Accordingly, an environment in which the laser transmitters can be installed to detect the position is necessary. Further, since a plurality of laser transmitters are required, cost as the system increases.

In this way, in the conventional position detection method, information obtained from outside is required to enhance accuracy of detection of position of the apparatus by the acceleration sensor, and therefore there is a problem that the environment where the position is detected is limited.

The present invention is made in the light of the problem in the above described conventional technique, and has an object to provide a position detection device and a position detection method that can enhance accuracy of position detection using an acceleration sensor without using information from outside.

Solution to Problem

A position detection device according to an embodiment of the present invention is a position detection device installed in an apparatus, and detecting a position of the apparatus, and includes an acceleration sensor configured to detect acceleration information of the apparatus, a static acceleration removing unit configured to remove static acceleration information indicating acceleration information in a static state of the apparatus, from the acceleration information detected by the acceleration sensor, and generate movement acceleration information indicating acceleration information in a moving state of the apparatus, an error deriving unit configured to derive an error component contained in the movement acceleration information, an acceleration correcting unit configured to correct the movement acceleration information by subtracting the error component from the movement acceleration information, and a position information acquiring unit configured to acquire position information of the apparatus based on the corrected movement acceleration information.

Further, a position detection method according to an embodiment of the present invention is a position detection method detecting a position of an apparatus, and includes a step of detecting acceleration information of the apparatus, a step of removing static acceleration information indicating acceleration information in a static state of the apparatus, from the detected acceleration information, and generating movement acceleration information indicating acceleration information in a moving state of the apparatus, a step of deriving an error component contained in the movement acceleration information, a step of correcting the movement acceleration information by subtracting the error component from the movement acceleration information, and a step of acquiring position information of the apparatus, based on the corrected movement acceleration information.

Advantageous Effects of Invention

According to an embodiment of the present invention, position information is acquired based on the acceleration information obtained by removing the error component from the acceleration information detected by the acceleration sensor, and thereby accuracy of position detection using the acceleration sensor can be enhanced without using information from outside.

Brief Description of Drawings

[Fig. 1] Fig. 1 shows a block diagram showing an example of a configuration of a position detection device according to embodiment 1.
[Fig. 2] Fig. 2 is a functional block diagram showing an example of a configuration of an arithmetic device in Fig. 1.
[Fig. 3] Fig. 3 is a flowchart showing an example of a flow of a position detection process by the position detection device in Fig. 1.
[Fig. 4] Fig. 4 is a graph showing an example of acceleration information detected by an acceleration sensor.
[Fig. 5] Fig. 5 is a graph showing an example of a result of removing static acceleration information from the acceleration information in Fig. 4.
[Fig. 6] Fig. 6 is a graph showing an example of a result that a trend is removed from movement acceleration information.
[Fig. 7] Fig. 7 is a graph showing an example of acceleration information detected by the acceleration sensor.
[Fig. 8] Fig. 8 is a graph showing an example of velocity information obtained based on the acceleration information in Fig. 7.
[Fig. 9] Fig. 9 is a graph showing an example of position information obtained based on the velocity information in Fig. 8.
[Fig. 10] Fig. 10 is a schematic diagram for explaining movement of the acceleration sensor in a case of acquiring position information.
[Fig. 11] Fig. 11 is a graph for explaining a result of acquisition of position information in a case of the acceleration sensor being moved.

Description of Embodiments

Embodiment 1.

A position detection device according to embodiment 1 of the present invention will be described hereinafter. The position detection device according to embodiment 1 is used, for example, in a locator or the like for locating objects buried in the ground, and detects a position of an installation apparatus. The position detection device like this is used as an inertial navigation system that detects a position of the installation apparatus without using information obtained from outside, for example.

[Configuration of position detection device 1]

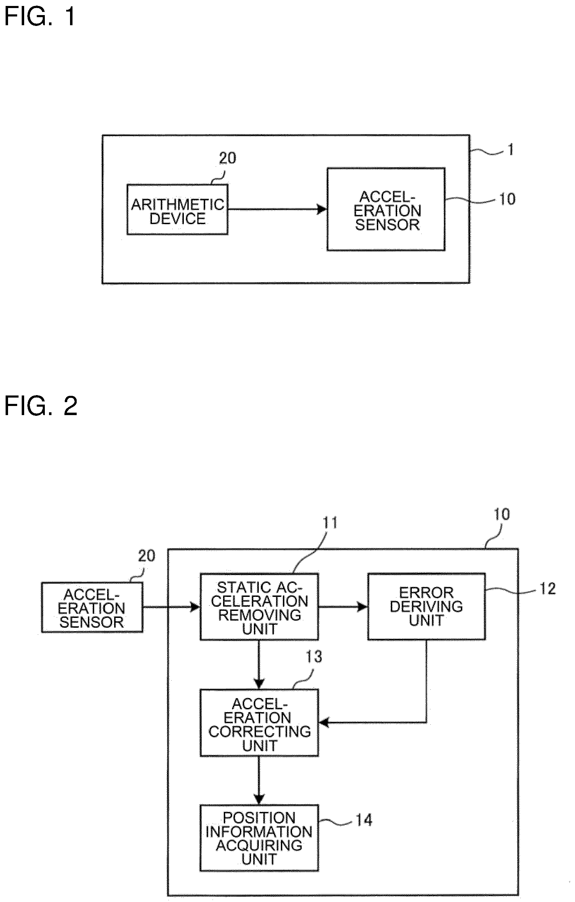

Fig. 1 is a block diagram showing an example of a configuration of a position detection device 1 according to the present embodiment 1. As illustrated in Fig. 1, the position detection device 1 includes an arithmetic device 10 and an acceleration sensor 20, and is installed in an installation apparatus such as a locator.
The acceleration sensor 20 detects acceleration information in each of three axial directions orthogonal to one another at a preset timing, and supplies the acceleration information to the arithmetic device 10. As the acceleration sensor 20, for example, a micro electro mechanical systems (MEMS) sensor is used.
The arithmetic device 10 detects a position of the installation apparatus in which the position detection device 1 is installed, based on acceleration information received from the acceleration sensor 20, and generates position information indicating the position. The arithmetic device 10 is a microcomputer, for example, and is configured by hardware such as a read only memory (ROM), a random access memory (RAM), a nonvolatile memory, an input device, an output device and a storage device such as a hard disk drive (HDD), and program software executed on a microcomputer, and the like.
In the example, the arithmetic device 10 and the acceleration sensor 20 are described to be integrally configured as the position detection device 1, but the position detection device 1 is not limited to the example. For example, only the acceleration sensor 20 is provided in the installation apparatus, and the arithmetic device 10 may be provided in an external apparatus such as a PC. In this case, the arithmetic device 10 and the acceleration sensor 2 are connected by wire or wirelessly.

[Configuration of arithmetic device 10]

Fig. 2 is a functional block diagram showing an example of a configuration of the arithmetic device 10 in Fig. 1. As shown in Fig. 2, the arithmetic device 10 includes a static acceleration removing unit 11, an error deriving unit 12, an acceleration correcting unit 13 and a position information acquiring unit 14.
The static acceleration removing unit 11 performs processing of removing acceleration information in a static state before and after movement of the installation apparatus, from acceleration information supplied from the acceleration sensor 20. Specifically, the static acceleration removing unit 11 removes static acceleration information that is acceleration information in a static state before the installation apparatus starts movement, and a static state after end of the movement. Subsequently, the static acceleration removing unit 11 extracts movement acceleration information that is acceleration information in a moving state of the installation apparatus.
The error deriving unit 12 derives a trend that is an error component contained in the acceleration information, based on the movement acceleration information extracted in the static acceleration removing unit 11. The trend is an error component such as a direct current (DC) offset component caused by hysteresis that is a characteristic of the MEMS sensor when the MEMS sensor is used as the acceleration sensor 20, for example.
The acceleration correcting unit 13 performs processing of correcting the movement acceleration information based on the movement acceleration information extracted in the static acceleration removing unit 11, and the trend derived in the error deriving unit 12. Specifically, the acceleration correcting unit 13 subtracts the trend from the movement acceleration information, and thereby corrects the movement acceleration information.
The position information acquiring unit 14 acquires position information indicating a position from a starting point of the acceleration sensor 20 provided in the installation apparatus, based on the movement acceleration information corrected in the acceleration correcting unit 13. Specifically, the position information acquiring unit 14 performs integration two times on the corrected movement acceleration information, and thereby acquires position information. At this time, the position information acquiring unit 14 uses position information on the starting point and an ending point of the acceleration sensor 20 that are set in advance.

[Position detection process]

Next, a position detection process will be described. In the present embodiment 1, position information with high accuracy is acquired by removing an error component contained in the acceleration information, when the position information is acquired from the acceleration information detected by the acceleration sensor 20.

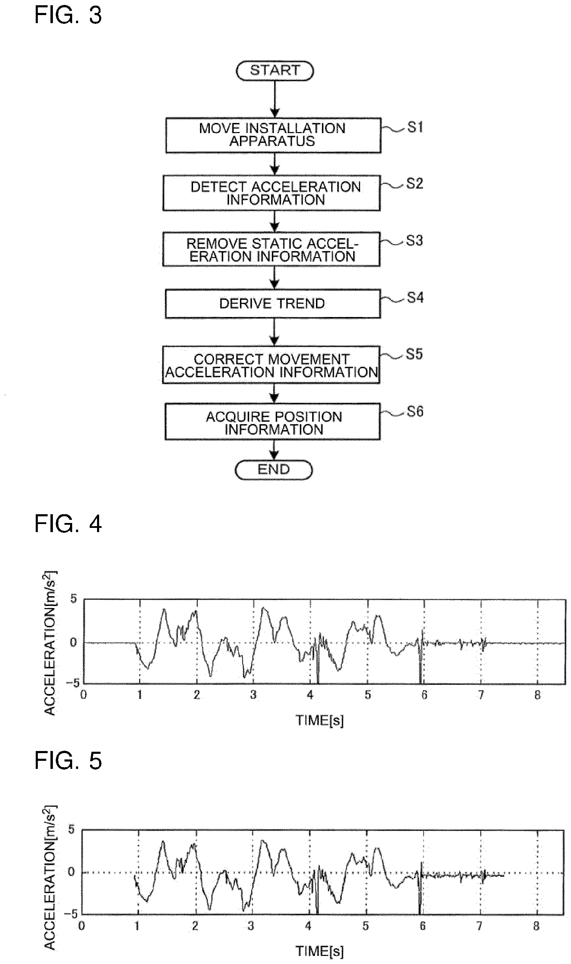

Fig. 3 is a flowchart showing an example of a flow of the position detection process by the position detection device 1 in Fig. 1. In the following, a case of detecting a position in any one axial direction of the three axial directions detected by the acceleration sensor 20 will be described by being taken as an example. As for a case of detecting positions of the other two axial directions, the positions can be detected by performing a same process.

Movement of device)

First, a user who performs position detection moves the installation apparatus in which the acceleration sensor 20 is provided manually or automatically (step S1). In this case, the user disposes the installation apparatus in which the acceleration sensor 20 is provided in a position to be a starting point of position detection, and thereafter moves the installation apparatus so that the starting point becomes an ending point. At this time, the acceleration sensor 20 detects acceleration information at a set timing, and supplies the detected acceleration information to the static acceleration removing unit 11 of the arithmetic device 10 (step S2). In the following explanation, "moving the installation equipment in which the acceleration sensor 20 is provided" will be described simply as "moving the acceleration sensor 20".

(Acquisition of static acceleration information)

Next, the static acceleration removing unit 11 removes static acceleration information that is acceleration information in a static state before and after movement from the acceleration information detected by the acceleration sensor 20 (step S3).

The acceleration information detected by the acceleration sensor 20 may also contain acceleration information in the static state before start of movement of the acceleration sensor 20 and after end of the movement.

In general, when the acceleration sensor 20 of MEMS is used, acceleration does not become "0" even when the acceleration sensor 20 is in a static state, and may indicate a value as if the acceleration sensor 20 is moving. The value of the acceleration in the static state becomes an error at a time of detecting a position, and becomes a cause of reducing detection accuracy. Therefore, in step S3, processing of removing the static acceleration information that is the acceleration information in the static state, from the acceleration information detected in the acceleration sensor 20 is performed.

Determination of whether the acceleration sensor 20 is in a static state, or in a moving state is performed based on jerk in the acceleration information detected by the sensor. Jerk indicates a change amount of the acceleration per unit time. When the state transitions from a static state to a moving state, or from the moving state to the static state, for example, the acceleration changes greatly, and therefore the jerk has a large value.

Accordingly, a range to be a threshold is set in advance to the jerk, and when the jerk is within a set range of the threshold, the acceleration sensor 20 can be determined as moving or stopping. In this way, the static acceleration removing unit 11 removes the static acceleration information from the acceleration information detected by the acceleration sensor 20, and generates movement acceleration information that is the acceleration information in the moving state.

(Derivation and removal of trend)

Next, the error deriving unit 12 of the arithmetic device 10 performs processing of deriving a trend that is an error component contained in the acceleration information from the movement acceleration information (step S4). Subsequently, the acceleration correcting unit 13 of the arithmetic device 10 performs correction processing of the movement acceleration information based on the trend derived in the error deriving unit 12 (step S5).

The movement acceleration information generated by the static acceleration removing unit 11 based on the acceleration information detected by the acceleration sensor 20 contains a trend that is an error component such as a DC offset to the acceleration caused by hysteresis as the characteristic of the MEMS sensor. Accordingly, an influence by the trend needs to be removed to detect the position of the acceleration sensor 20 accurately.

When the movement acceleration information based on the detection result of the acceleration sensor 20 is set as f(t), the error component (trend) is set as $\varepsilon$(t), and true acceleration information is set as $\alpha$(t), a relationship shown in expression (1) is established among them.

[Expression 1]

$$f(t) = \alpha(t) + \varepsilon(t) \qquad \ldots \ (1)$$

The trend contains a direct-current component such as a DC offset, and a component changing gradually over time. Accordingly, the trend $\varepsilon$(t) is defined by an approximate expression by a linear function or the like as in expression (2) here. Here, "a" and "b" in expression (2) are constants for determining the trend $\varepsilon$(t).

[Expression 2]

$$\varepsilon(t) = at + b \qquad \ldots (2)$$

Accordingly, based on expression (1) and expression (2), the movement acceleration information f(t) can be expressed as shown in expression (3).
[Expression 3]

$$f(t) = \alpha(t) + at + b \qquad \ldots (3)$$

Next, an error function Error to the movement acceleration information f(t) in a case where acceleration being measured by the acceleration sensor 20 from a time 0 to time T is defined as shown in expression (4).
[Expression 4]

$$Error = \int_{0}^{T} \{f(t) - (at + b)\} dt \qquad \cdots (4)$$

Subsequently, the constants a and b that make the value of the error function Error in expression (4) minimum are calculated. This corresponds to approximating the movement acceleration information f(t) by a least square using a linear function of "at+b". Thereby, the trend $\varepsilon(t)$ is determined. Approximation is not limited to the approximation as described above, but a known approximation method such as a method using an n-order function that is a quadratic function or more can be used.

Next, expression (5) to calculate the true acceleration information $\alpha(t)$ is derived from expression (3), and the true acceleration information $\alpha(t)$ that is a result of removing the trend $\varepsilon(t)$ from the movement acceleration information f(t) can be obtained by using the constants a and b calculated based on expression (4).
[Expression 5]

$$\alpha(t) = f(t) - (at + b) \qquad \ldots (5)$$

(Acquisition of position information)

Next, the position information acquiring unit 14 of the arithmetic device 10 performs processing of acquiring position information based on the true acceleration information $\alpha(t)$ calculated in the acceleration correcting unit 13 (step S6). The position information can be calculated by performing integration two times on the true acceleration information $\alpha(t)$.

First, the position information acquiring unit 14 calculates velocity information v(t) based on the calculated true acceleration information $\alpha(t)$. The velocity information v(t) can be obtained by integrating the true acceleration information $\alpha(t)$, and is calculated by expression (6). In expression (6), velocity information v(0) is an initial value, and indicates a velocity before start of measurement of the acceleration.
[Expression 6]

$$v(t) = v(0) + \int_{0}^{t} \alpha(t) dt \qquad \cdots (6)$$

Further, velocity information v(T) at a time T when measurement of the acceleration by the acceleration sensor 20 is ended is calculated based on expression (7). The velocity information v(0) in expression (7) indicates a velocity before start of measurement of the acceleration as in expression (6).
[Expression 7]

$$v(T) = v(0) + \int_0^T \alpha(t)dt \qquad \cdots (7)$$

Here, since the acceleration sensor 20 is in a static state before start and after end of measurement of the acceleration in the present embodiment 1, the velocity information v(0) in expression (6) and expression (7), and the velocity information v(T) in expression (7) have values of "0". This is understandable from the fact that the direct-current component contained in the trend $\varepsilon(t)$ is removed from the movement acceleration information f(t) in expression (5).

Next, the position information acquiring unit 14 calculates position information x(t) based on the calculated velocity information v(t). The position information x(t) can be obtained by integrating the velocity information v(t), and can be calculated by expression (8). In expression (8), position information x(0) is an initial value, and indicates a position before start of measurement of the acceleration.

[Expression 8]

$$x(t) = x(0) + \int_0^t v(t)dt \qquad \cdots (8)$$

Further, position information x(T) at the time T when measurement of the acceleration by the acceleration sensor 20 is ended is calculated based on expression (9). The position information x(0) in expression (9) indicates a position before start of measurement of the acceleration as in expression (8).

[Expression 9]

$$x(T) = x(0) + \int_0^T v(t)dt = 0 \qquad \cdots (9)$$

Note that the direct-current component and the trend component contained in the velocity information v(t) are already removed as expressed by "v(0)=v(T)=0". Accordingly, a value of the position information x(T) is also "0". In other words, a position before measurement and a position after measurement of the acceleration correspond to each other.

In this way, in the present embodiment 1, the acceleration sensor 20 is moved so that the position before measurement of the acceleration and the position after measurement of the acceleration correspond to each other, and the movement acceleration information f(t) at this time is derived.

Subsequently, the position information x(t) is acquired based on the true acceleration information $\alpha(t)$ obtained by removing the trend $\varepsilon(t)$ from the derived movement acceleration information f(t). Thereby, various error factors contained in the acceleration information detected by the acceleration sensor 20 are removed, and therefore the position of the acceleration sensor 20 can be detected with high accuracy.

Fig. 4 is a graph showing an example of the acceleration information detected by the acceleration sensor 20. Fig. 5 is a graph showing an example of the result that the static acceleration information is removed from the acceleration information in Fig. 4. As shown in Fig. 4 and Fig. 5, it is found that the static acceleration information is removed by the static acceleration removing unit 11, and thereby the static acceleration information on the states before and after movement is removed. In the states before and after movement, the acceleration sensor 20 is considered to be in a static state.

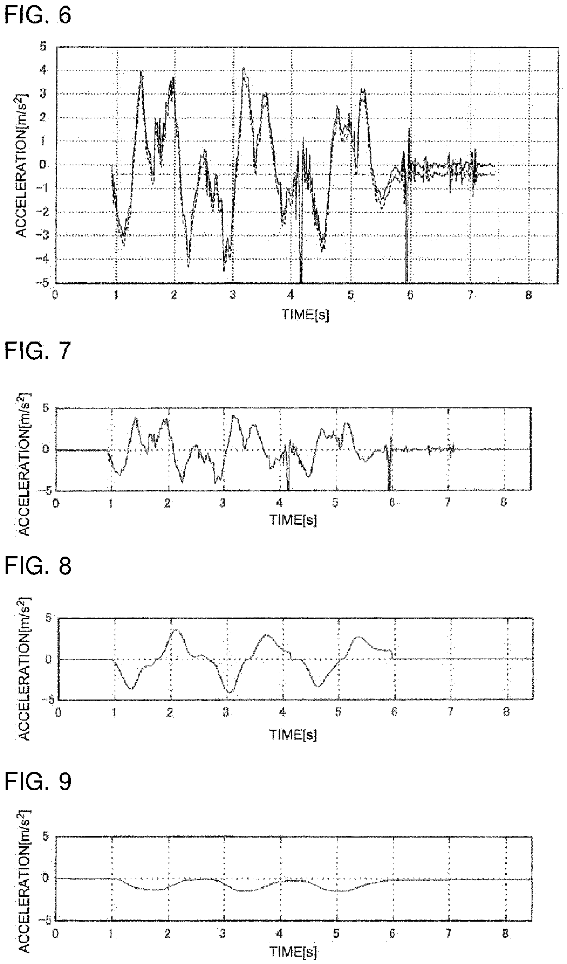

Fig. 6 is a graph showing an example of a result that the trend is removed from the movement acceleration information. In Fig. 6, a graph shown by a solid line shows the movement acceleration information f(t) generated by the static acceleration removing unit 11. A graph shown by a dotted line shows the true acceleration information $\alpha(t)$ obtained by removing the trend from the movement acceleration information f(t) by the acceleration correcting unit 13. A graph shown by a chain line shows the trend $\varepsilon(t)$.

As shown in Fig. 6, it is found that due to an error component such as a DC offset, the acceleration is not "0" in the movement acceleration information f(t) in the static state before movement and in the static state after movement. In contrast with this, in the true acceleration information $\alpha(t)$ obtained by removing the trend, the acceleration is "0" in the static state before movement and in the static state after movement, and it is found that the static states are correctly detected.

Fig. 7 is a graph showing an example of the acceleration information detected by the acceleration sensor 20. Fig. 8 is a graph showing an example of the velocity information obtained based on the acceleration information in Fig. 7. Fig. 9 is a graph showing an example of the position information obtained based on the velocity information in Fig. 8.

Fig. 7 shows acceleration information detected by the acceleration sensor 20. Fig. 8 shows velocity information obtained by integrating the acceleration information in Fig. 7. Fig. 9 shows position information obtained by integrating the velocity information in Fig. 8. It is found that the position information of the acceleration sensor 20 can be acquired by performing integration two times on the acceleration information detected by the acceleration sensor 20 in this way.

Next, a detection result of the position information in a case of the position detection process shown in Fig. 3 being performed will be described. Here, the acceleration sensor 20 is actually moved, and a case where the position information is acquired by performing the position detection process shown in Fig. 3, and a case where the position information is acquired without performing the position detection process are compared and explained.

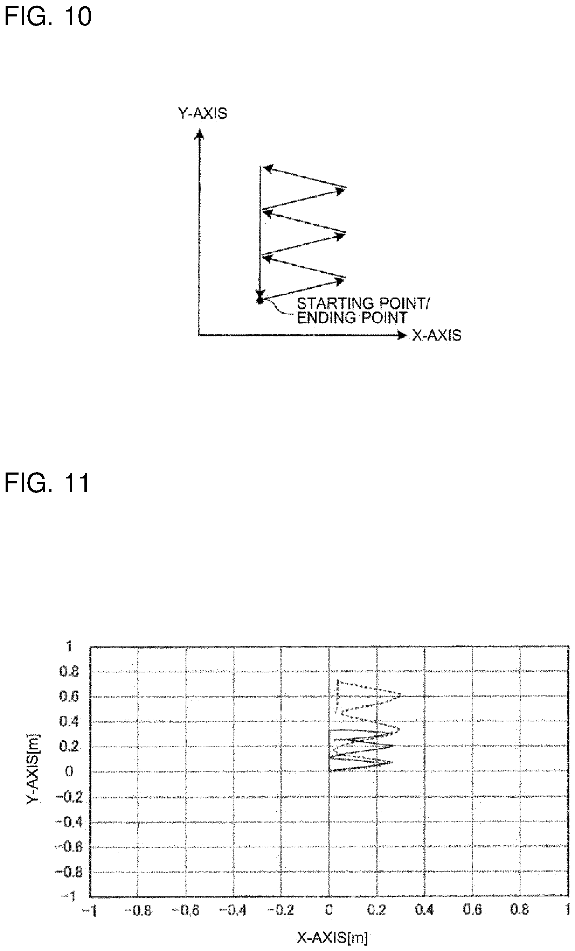

Fig. 10 is a schematic diagram for explaining movement of the acceleration sensor 20 in the case of acquiring the position information. Fig. 11 is a graph for explaining an acquisition result of the position information in a case of the acceleration sensor 20 being moved. In Fig. 11, a graph shown by a solid line shows a position of the acceleration sensor 20 in a case of the position detection process being performed. A graph shown by a dotted line shows a position of the acceleration sensor 20 in a case of not performing the position detection process. Here, a case where the acceleration sensor 20 is moved on XY coordinates formed of an X-axis and a Y-axis of the three axes is take as an example and explained.

When the acceleration sensor 20 is moved from a set starting point to an ending point at a same position as the starting point in an order indicated by arrows in Fig. 10, it is found that a position detection result substantially equivalent to a locus at a time of the acceleration sensor 20 being actually moved is obtained when the position detection process is performed as shown in Fig. 11. In contrast with this, when the position detection process is not performed, the position detection result different from a moving locus of the acceleration sensor 20 is obtained. In particular, in the example, it is found that the position of the starting point and the position of the ending point do not correspond to each other.

As above, the position detection device 1 according to the present embodiment 1 generates the movement acceleration information by removing the static acceleration information from the acceleration information detected by the acceleration sensor 20, and corrects the movement acceleration information by subtracting an error component from the generated movement acceleration information. Subsequently, the position detection device 1 acquires the position information of the apparatus based on the corrected movement acceleration information. Since an error factor at the time of position detection is removed by removing the error component from the acceleration information detected by the acceleration sensor 20, the position information can be detected with high accuracy.

Embodiment 1 of the present invention is described as above, but the present invention is not limited to embodiment 1 of the present invention described above, and various modifications and applications can be made within the range without departing from the gist of the present invention.

For example, in the aforementioned example, the starting point and the ending point in the case of moving the acceleration sensor 20 are described as being at the same position, but the starting point and the ending point are not limited to this, and may be different from each other. In this case, a trend is derived by adding a virtual motion of returning from the ending point to the starting point is added to an end portion of the acceleration information detected by the acceleration sensor 20. Subsequently, the movement acceleration information based on the actual acceleration information detected by the acceleration sensor 20 is corrected with the derived trend.

Further, by using a starting point and an ending point of which positions are known in a certain coordinate system, position data of the starting point and the ending point become acquirable, and the position data can be used. Specifically, when a position detection device is moved/scanned, movement/scan is started from a determined starting point and movement/scan is completed at a determined ending point. In this way, the position data of the starting point and the ending point that are known in a certain coordinate system can be used by being inputted (can be inputted as set values in advance) to the position detection device and used. Note that there is no problem when the starting point and the ending point are at the same position as a matter of course.

Reference Signs List

1    position detection device
10   arithmetic device
11   static acceleration removing unit
12   error deriving unit

13    acceleration correcting unit
14    position information acquiring unit
20    acceleration sensor

**Claims**

1. A position detection device installed in an apparatus, and detecting a position of the apparatus, the position detection device comprising:

   an acceleration sensor configured to detect acceleration information of the apparatus;
   a static acceleration removing unit configured to remove static acceleration information indicating acceleration information in a static state of the apparatus, from the acceleration information detected by the acceleration sensor, and generate movement acceleration information indicating acceleration information in a moving state of the apparatus;
   an error deriving unit configured to derive an error component contained in the movement acceleration information;
   an acceleration correcting unit configured to correct the movement acceleration information by subtracting the error component from the movement acceleration information; and
   a position information acquiring unit configured to acquire position information of the apparatus based on the corrected movement acceleration information.

2. The position detection device of claim 1, wherein the position information acquiring unit detects a position by using data of a starting point position of the apparatus and data of an ending point position at a time of the apparatus being moved when detecting the position of the apparatus, based on the acceleration information detected by the acceleration sensor.

3. The position detection device of claim 1 or 2, wherein
   the error deriving unit
   derives the error component by an approximate expression.

4. The position detection device of claim 3, wherein
   the approximate expression is an approximate expression by a linear function.

5. The position detection device of any one of claims 1 to 4, wherein
   the static acceleration removing unit
   compares a jerk indicating a change amount of the acceleration information and a set range, and determines that acceleration information corresponding to the jerk is the static acceleration information when the jerk is within the set range.

6. The position detection device of any one of claims 1 to 5, wherein
   the position information acquiring unit
   acquires the position information by performing integration two times on the corrected movement acceleration information.

7. A position detection method detecting a position of an apparatus, the method comprising:

   a step of detecting acceleration information of the apparatus;
   a step of removing static acceleration information indicating acceleration information in a static state of the apparatus, from the detected acceleration information, and generating movement acceleration information indicating acceleration information in a moving state of the apparatus;
   a step of deriving an error component contained in the movement acceleration information;
   a step of correcting the movement acceleration information by subtracting the error component from the movement acceleration information; and
   a step of acquiring position information of the apparatus, based on the corrected movement acceleration information.

FIG. 1

```
                                                    ┌─ 1
  ┌──────────────────────────────────────────────┐
  │              20                               │
  │             ~                                 │
  │   ┌──────────────┐         ┌──────────────┐   │
  │   │ ARITHMETIC   │────────▶│  ACCEL-      │───┼─ 10
  │   │ DEVICE       │         │  ERATION     │   │
  │   │              │         │  SENSOR      │   │
  │   └──────────────┘         └──────────────┘   │
  │                                               │
  └──────────────────────────────────────────────┘
```

FIG. 2

```
                              11                  10
                              ~                   ~
          ┌──────────────────────────────────────────────┐
  20      │   ┌──────────────┐      ┌──────────────┐       │
  ~       │   │ STATIC AC-   │      │  ERROR       │       │
┌─────────┐   │ CELERATION   │─────▶│  DERIVING    │───────┼─ 12
│ ACCEL-  │──▶│ REMOVING     │      │  UNIT        │       │
│ ERATION │   │ UNIT         │      │              │       │
│ SENSOR  │   └──────────────┘      └──────────────┘       │
└─────────┘          │        13            │              │
          │          │        ~             │              │
          │          ▼   ┌──────────────┐   │              │
          │          │   │ ACCEL-       │   │              │
          │          └──▶│ ERATION      │◀──┘              │
          │              │ CORRECTING   │                  │
          │              │ UNIT         │                  │
          │              └──────────────┘                  │
          │                     │                          │
          │                     ▼                          │
          │              ┌──────────────┐                  │
          │              │ POSITION     │── 14             │
          │              │ INFORMATION  │                  │
          │              │ ACQUIRING    │                  │
          │              │ UNIT         │                  │
          │              └──────────────┘                  │
          └──────────────────────────────────────────────┘
```

## FIG. 3

```
        ( START )
            │
            ▼
┌───────────────────────┐
│  MOVE INSTALLATION     │─── S1
│  APPARATUS             │
└───────────────────────┘
            │
            ▼
┌───────────────────────┐
│  DETECT ACCELERATION   │─── S2
│  INFORMATION           │
└───────────────────────┘
            │
            ▼
┌───────────────────────┐
│  REMOVE STATIC ACCEL-  │─── S3
│  ERATION INFORMATION   │
└───────────────────────┘
            │
            ▼
┌───────────────────────┐
│  DERIVE TREND          │─── S4
└───────────────────────┘
            │
            ▼
┌───────────────────────┐
│  CORRECT MOVEMENT      │─── S5
│  ACCELERATION INFORMATION │
└───────────────────────┘
            │
            ▼
┌───────────────────────┐
│  ACQUIRE POSITION      │─── S6
│  INFORMATION           │
└───────────────────────┘
            │
            ▼
        ( END )
```

## FIG. 4

## FIG. 5

## FIG. 6

## FIG. 7

## FIG. 8

## FIG. 9

FIG. 10

FIG. 11

## INTERNATIONAL SEARCH REPORT

| International application No. |
| --- |
| PCT/JP2018/022425 |

A. CLASSIFICATION OF SUBJECT MATTER
Int.Cl. G01C21/16(2006.01)i

According to International Patent Classification (IPC) or to both national classification and IPC

B. FIELDS SEARCHED

Minimum documentation searched (classification system followed by classification symbols)
Int.Cl. G01C21/16

Documentation searched other than minimum documentation to the extent that such documents are included in the fields searched
| Published examined utility model applications of Japan | 1922-1996 |
| --- | --- |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2009-25012 A (ALPINE ELECTRONICS, INC.) 05 February 2009, paragraphs [0004], [0017]-[0020], [0028]-[0029], [0055]-[0059], [0066], fig. 1-3, 5 (Family: none) | 1-4, 7<br>5-6 |
| Y | US 2015/0025747 A1 (CHUNDRLIK, JR. William J.) 22 January 2015, paragraphs [0036], [0066]-[0067], fig. 1 (Family: none) | 5 |
| Y | JP 10-9877 A (OMRON CORP.) 16 January 1998, paragraphs [0019], [0036], [0039], fig. 6 (Family: none) | 6 |

☐ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 06 August 2018 (06.08.2018) | 14 August 2018 (14.08.2018) |

| Name and mailing address of the ISA/<br>  Japan Patent Office<br>  3-4-3, Kasumigaseki, Chiyoda-ku,<br>  Tokyo 100-8915, Japan | Authorized officer<br><br>Telephone No. |
| --- | --- |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Real-time Localization in Outdoor Environments using Stereo Vision and Inexpensive GPS. **AGRAWAL, M. ; KONOLIGE, K.** In 18th International Conference on Pattern Recognition (ICPR'06). IEEE, 2006, 1063-1068

- A GPS and Laser-based localization for urban and non-urban outdoor environments. **I, M. ; WULF,O. ; WAGNER, B.** IEEE/RSJ International Conference on Intelligent Robots and Systems. IEEE, 2008, 149-154